# EUROPÄISCHE PATENTSCHRIFT

(11) **EP 1 236 773 B1**
(45) Veröffentlichungstag und Bekanntmachung des Hinweises auf die Patenterteilung: **29.10.2008**
(21) Anmeldenummer: 02002225.7
(22) Anmeldetag: 30.01.2002
(51) Int. Cl.: C09C 3/12, C09C 1/30, C09C 1/36

(54) **Oberflächenmodifizierte, dotierte, pyrogen hergestellte Oxide**
Surface modified, doped, pyrogenically produced oxides
Traitement de surface d'oxydes dopés préparés par voie pyrogénique

(30) Priorität: 28.02.2001 DE 10109484
(43) Veröffentlichungstag der Anmeldung: 04.09.2002
(73) Patentinhaber: Evonik Degussa GmbH, 45128 Essen (DE)
(72) Erfinder: Kerner, Dieter Dr., 63450 Hanau (DE); Mangold, Helmut Dr., 63517 Rodenbach (DE); Meyer, Jürgen Dr., 63811 Stockstadt/Main (DE)

(56) Entgegenhaltungen:
- EP-A- 0 725 037
- EP-A- 0 995 718

## Beschreibung

Die Erfindung betrifft oberflächenmodifizierte, dotierte, pyrogen hergestellte Oxide, ein Verfahren zu ihrer Herstellung sowie ihre Verwendung.

Mittels Aerosol dotierte, pyrogen hergestellte Oxide sind beispielsweise bekannt aus DE 196 50 500 A1.

Gegenstand der Erfindung sind oberflächenmodifizierte, mittels Aerosol dotierte, pyrogen hergestellte Oxide **dadurch gekennzeichnet, daß** sie mit einer oder mehreren Verbindungen aus den folgenden Gruppen oberflächenmodifiziert sind:
a) Organosilane des Types (RO)₃Si(CₙH₂ₙ₊₁) und (RO)₃Si(CₙH₂ₙ₋₁)
   R = Alkyl, wie zum Beispiel Methyl-, Ethyl-, n-Propyl-, i-Propyl-, Butyl-
   n = 1 - 20
b) Organosilane des Types R'ₓ(RO)_{y}Si(CₙH₂ₙ₊₁) und (RO)₃Si(CₙH₂ₙ₊₁)
   R = Alkyl, wie zum Beispiel Methyl-, Ethyl-, n-Propyl-, i-Propyl-, Butyl-
   R' = Alkyl, wie zum Beispiel Methyl-, Ethyl-, n-Propyl-, i-Propyl-, Butyl -
   R'=Cycloalkyl
   n = 1 - 20
   x+y = 3
   x = 1,2
   y = 1,2
c) Halogenorganosilane des Types X₃Si(CₙH₂ₙ₊₁) und
   X₃Si(CₙH₂ₙ₋₁)
   X = Cl, Br
   n = 1 - 20

d) Halogenorganosilane des Types X₂(R')Si(CₙH₂ₙ₊₁) und
   X₂(R')Si(CₙH₂ₙ₋₁)
   X = Cl, Br
   R' = Alkyl, wie zum Beispiel Methyl-, Ethyl-, n-Propyl-, i-Propyl-, Butyl-
   R'=Cycloalkyl
   n = 1 - 20
e) Halogenorganosilane des Types X(R')₂Si(CₙH₂ₙ₊₁) und
   X(R')₂Si(CₙH₂ₙ₋₁)
   X = Cl, Br
   R' = Alkyl, wie zum Beispiel Methyl-, Ethyl-,
   R'=Cycloalkyl
   n-Propyl-, i-Propyl-, Butyl-
   n = 1 - 20
f) Organosilane des Types (RO)₃Si(CH₂)ₘ-R'
   R = Alkyl, wie Methyl-, Ethyl-, Propyl-
   m = 0,1 - 20
   R' = Methyl-, Aryl (zum Beispiel -C₆H₅, substituierte
   Phenylreste)
   -C₄F₉, OCF₂-CHF-CF₃, -C₆F₁₃, -O-CF₂-CHF₂
   -NH₂, -N₃, -SCN, -CH=CH₂, -NH-CH₂-CH₂-NH₂,
   -N- (CH₂-CH₂-NH₂)₂
   -OOC(CH₃) = CH₂
   -OCH₂-CH(O)CH₂
   -NH-CO-N-CO-(CH₂)₅
   -NH-COO-CH₃, -NH-COO-CH₂-CH₃, -NH-(CH₂)₃Si(OR)₃
   -Sₓ-(CH₂)₃Si(OR)₃
   -SH
   -NR'R"R"' (R' = Alkyl, Aryl; R'' = H, Alkyl, Aryl; R''' = H, Alkyl, Aryl, Benzyl, C₂H₄NR'''' R""' mit R"" = A, Alkyl und R""' = H, Alkyl)
g) Organosilane des Typs (R")ₓ(RO)_{y}Si(CH₂)ₘ-R'
   R" = Alkyl x+y = 2
   = Cycloalkyl x = 1,2
   y = 1,2
   m = 0,1 bis 20
   R' = Methyl-, Aryl (zum Beispiel -C₆H₅, substituierte
   Phenylreste)
   -C₄F₉, -OCF₂-CHF-CF₃, -C₆F₁₃, -O-CF₂-CHF₂
   -NH₂, -N₃, -SCN, -CH=CH₂, -NH-CH₂-CH₂-NH₂,
   -N-(CH₂-CH₂-NH₂)
   -OOC(CH₃)C = CH₂

-OCH₂-CH(O) CH₂
   -NH-CO-N-CO-(CH₂)₅
   -NH-COO-CH₃, -NH-COO-CH₂-CH₃, -NH-(CH₂)₃Si(OR)₃
   -Sₓ-(CH₂)₃Si(OR)₃
   -SH - NR'R''R''(R' = Alkyl, Aryl; R'' = H,
   Alkyl, Aryl; R''' = H, Alkyl, Aryl, Benzyl, C₂H₄NR'''' R""' mit R"" = A, Alkyl und
   R''''' = H, Alkyl)
h) Halogenorganosilane des Types X₃Si(CH₂)ₘ-R'
   X = Cl, Br
   m = 0,1 - 20
   R' = Methyl-, Aryl (zum Beispiel -C₆H₅, substituierte Pheneylreste)
   -C₄F₉, -OCF₂-CHF-CF₃, -C₆F₁₃, -O-CF₂-CHF₂
   -NH₂, -N₃, -SCN, -CH=CH₂,
   -NH-CH₂-CH₂-NH₂
   -N- (CH₂-CH₂-NH₂)
   -OOC(CH₃)C = CH₂
   -OCH₂-CH(O)CH₂
   -NH-CO-N-CO-(CH₂)₅
   -NH-COO-CH₃, -NH-COO-CH₂-CH₃, -NH-(CH₂)₃Si(OR)₃
   -Sₓ-(CH₂)₃Si(OR)₃
   -SH
i) Halogenorganosilane des Types (R)X₂Si(CH₂)ₘ-R'
   X = Cl, Br
   R = Alkyl, wie Methyl,- Ethyl-, Propyl-
   m = 0,1 - 20
   R' = Methyl-, Aryl (z.B. -C₆H₅, substituierte Phenylreste)
   -C₄F₉, -OCF₂-CHF-CF₃, -C₆F₁₃, -O-CF₂-CHF₂
   -NH₂, -N₃, -SCN, -CH=CH₂,-NH-CH₂-CH₂-NH₂,
   -N- (CH₂-CH₂-NH₂)₂
   -OOC(CH₃)C = CH₂
   -OCH₂-CH(O)CH₂
   -NH-CO-N-CO-(CH₂)₅
   -NH-COO-CH₃, -NH-COO-CH₂-CH₃, -NH-(CH₂)₃Si(OR)₃,
   wobei R = Methyl-, Ethyl-, Propyl-, Butyl- sein kann
   -Sₓ-(CH₂)₃Si(OR)₃, wobei R = Methyl-, Ethyl-,
   Propyl-, Butyl- sein kann
   -SH

(j) Halogenorganosilane des Types (R)₂X Si(CH₂)ₘ-R'
   X = Cl, Br
   R = Alkyl
   m = 0,1 - 20
   R' = Methyl-, Aryl (z.B. -C₆H₅, substituierte Phenylreste)
   -C₄F₉, -OCF₂-CHF-CF₃, -C₆F₁₃, -O-CF₂-CHF₂
   -NH₂, -N₃, -SCN, -CH=CH₂, -NH-CH₂-CH₂-NH₂,
   -N-(CH₂-CH₂-NH₂)
   -OOC(CH₃)C = CH₂
   -OCH₂-CH (O) CH₂
   -NH-CO-N-CO-(CH₂)₅
   -NH-COO-CH₃, -NH-COO-CH₂-CH₃, -NH-(CH₂)₃Si(OR)₃
   -Sₓ-(CH₂)₃Si(OR)₃
   -SH
(k) Silazane des Types 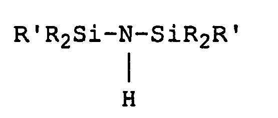 R = Alkyl
   R' = Alkyl, Vinyl
(l) Cyclische Polysiloxane des Types D 3, D 4, D 5, wobei unter D 3, D 4 und D 5 cyclische Polysiloxane mit 3,4 oder 5 Einheiten des Typs -O-Si(CH₃)₂- verstanden wird. Z.B. Octamethylcyclotetrasiloxan = D 4 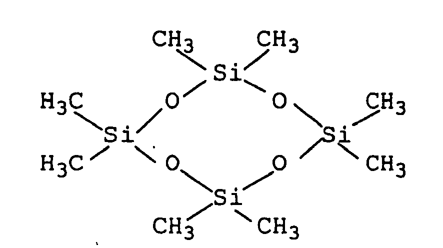
(m) Polysiloxane beziehungsweise Silikonöle des Types 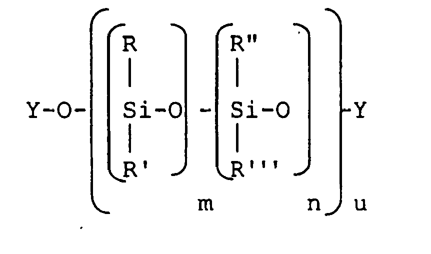 m = 0, 1, 2, 3, ...∞
   n = 0, 1, 2, 3, ...∞
   u = 0, 1, 2, 3, ...∞
   Y=CH₃, H, CₙH₂ₙ₊₁ n=1-20
   Y=Si (CH₃) ₃, Si(CH₃)₂H

Si (CH₃) ₂OH, Si (CH₃) ₂ (OCH₃)
   Si (CH₃) ₂ (CₙH₂ₙ₊₁) n=1-20
   - R": = Alkyl, wie CₙH₂ₙ₊₁, wobei n = 1 bis 20 ist, Aryl, wie Phenyl- und substituierte Phenylreste, (CH₂)ₙ-NH₂, H
   - R' =: Alkyl, wie CₙH₂ₙ₊₁, wobei n = 1 bis 20 ist, Aryl, wie Phenyl- und substituierte Phenylreste, (CH₂)ₙ-NH₂, H
   - R'' =: Alkyl, wie CₙH₂ₙ₊₁. wobei n = 1 bis 20 ist, Aryl, wie Phenyl- und substituierte Phenylreste, (CH₂)ₙ-NH₂, H
   - R''' =: Alkyl, wie CₙH₂ₙ₊₁. wobei n = 1 bis 20 ist, Aryl, wie Phenyl- und substituierte Phenylreste, (CH₂)ₙ-NH₂, H
Bevorzugt können die oberflächenmodifizierten, mittels Aerosol dotierte, pyrogen hergestellten Oxide dadurch gekennzeichnet sein, dass die Oxide aus der Gruppe SiO₂, Al₂O₃, TiO₂, B₂O₃, ZrO₂, In₂O₃, ZnO, Fe₂O₃, Nb₂O₅, V₂O₅, WO₃, SnO₂, GeO₂ sein.

Ein weiterer Gegenstand der Erfindung ist ein Verfahren zur Herstellung der erfindungsgemäßen oberflächenmodifizierten mittels Aerosol dotierten pyrogen hergestellten Oxide, welches dadurch gekennzeichnet ist, daß man mittels Aerosol dotierte pyrogen hergestellte Oxide in einem geeigneten Mischgefäß vorlegt, unter intensivem Mischen die mittels Aerosol dotierten, pyrogen hergestellten Oxide, gegebenenfalls zunächst mit Wasser und/oder Säure anschließend mit dem Oberflächenmodifizierungsreagenz oder dem Gemisch aus mehreren Oberflächenmodifizierungsreagentien besprüht, gegebenenfalls 15 bis 30 Minuten nachmischt und anschließend bei einer Temperatur von 100 bis 400 °C über einen Zeitraum von 1 bis 6 Stunden tempert.

Das eingesetzte Wasser kann mit einer Säure, zum Beispiel Salzsäure, bis zu einem pH-Wert von 7 bis 1 angesäuert sein. Das eingesetzte Oberflächenmodifizierungsreagenz kann in einem geeigneten Lösungsmittel, wie zum Beispiel Ethanol, gelöst sein. Das Mischen und/oder die Temperung kann in einer Schutzgasatmosphäre, wie zum Beispiel Stickstoff, durchgeführt werden.

Ein weiterer Gegenstand der Erfindung ist ein Verfahren zur Herstellung der erfindungsgemäßen oberflächenmodifizierten, mittels Aerosol dotierten pyrogen hergestellten Oxide, welches dadurch gekennzeichnet ist, daß man das mittels Aerosol dotierte, pyrogen hergestellte Oxid unter Sauerstoffausschluß möglichst homogen mit Organohalogensilanen vermischt, das Gemisch zusammen mit geringen Wasserdampfmengen und gegebenenfalls zusammen mit einem Inertgas im kontinuierlich ablaufenden Gleichstromverfahren in einem als aufrecht stehenden, rohrförmigen Ofen ausgebildeten Behandlungsraum auf Temperaturen von 200 bis 800°C, vorzugsweise 400 bis 600 °C, erhitzt, die festen und gasförmigen Reaktionsprodukte voneinander trennt, die festen Produkte gegebenenfalls nachentsäuert und trocknet.

Die mittels Aerosol dotierten, pyrogen hergestellten Oxide können dotierte, pyrogen hergestellte Oxide von Metallen und/oder Metalloiden sein, wobei die Basiskomponente pyrogen, mittels Flammenhydrolyse hergestellte Oxide von Metallen und/oder Metalloiden sind, die mit mindestens einer Dotierungskomponente von 0,00001 bis 20 Gew.-% dotiert sind, die Dotierungsmenge vorzugsweise im Bereich von 1 bis 10.000 ppm liegen kann, und die Dotierungskomponente ein Metalloid und/oder Metall oder ein Metalloidsalz und/oder Metallsalz oder ein Oxid eines Metalls und/oder Metalloide ist, und die BET-Oberfläche der dotierten Oxide zwischen 5 und 600 m²/g liegt.

Sie können hergestellt werden, indem man in eine Flamme, wie sie zur Herstellung von pyrogenen Oxiden mittels Flammenhydrolyse in bekannter Weise benutzt wird, ein Aerosol einspeist, dieses Aerosol vor der Reaktion mit dem Gasgemisch der Flammenoxidation beziehungsweise Flammenhydrolyse homogen mischt, das Aerosol-Gasgemisch in einer Flamme abreagieren läßt und die entstandenen dotierten pyrogen hergestellten Oxide in bekannter Weise vom Gasstrom abtrennt, wobei als Ausgangsprodukt des Aerosols eine Salzlösung oder Suspension, die die Komponente der zu dotierenden Substanz, die ein Metallsalz oder Metalloidsalz oder Mischungen von beiden oder eine Suspension einer unlöslichen Metall- oder Metalloidverbindung sein kann, enthält, dient, wobei das Aerosol durch Vernebelung mittels einer Zweistoffdüse oder durch einen Aerosolgenerator vorzugsweise nach der Ultraschallmethode oder durch eine andere Art der Aerosolerzeugung hergestellt wird. Ein derartiges Verfahren ist bekannt aus DE 196 50 500 A1.

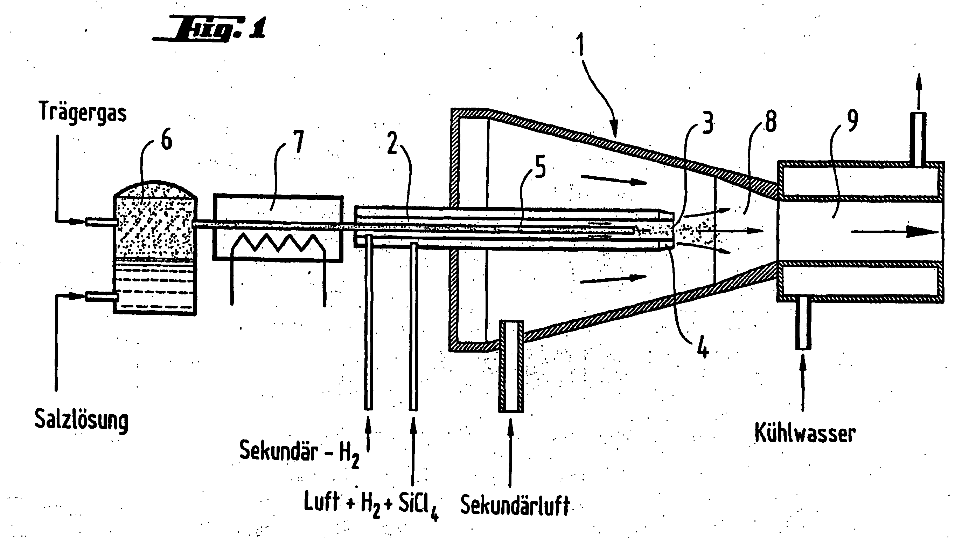

Das Aerosol kann in einer bevorzugten Ausführungsform der Erfindung mittels einer Vorrichtung, wie sie in der Figur 1 dargestellt ist, zugeführt werden. Dabei können für die Gas- und Aerosol-Zufuhr auch die Leitungen vertauscht sein.

In einer weiteren Ausführungsform der Erfindung kann man das Aerosol mittels einer Ringdüse, die in einem beliebigen Winkel vorzugsweise senkrecht, zum Hauptgasstrom angeordnet ist, zugeführt werden.

Als Basiskomponente können die Metalloide/Metalle Aluminium, Niob, Titan, Wolfram, Zirkon, Germanium, Bor, Indium, Eisen, Vanadium, Wolfram, Zink und/oder Silicium eingesetzt werden.

Als Dotierkomponente können Metalle und/oder Metalloide und deren Verbindungen, soweit sie in einer flüssigen Lösung löslich oder suspendierbar sind, eingesetzt werden. In einer bevorzugten Ausführungsform können Verbindungen von Übergangsmetallen und/oder Edelmetallen eingesetzt werden.

Beispielsweise können Cer- und Kaliumsalze als Dotierungskomponenten eingesetzt werden.

Das Verfahren der Flammenhydrolyse zur Herstellung von pyrogenen Oxiden ist aus Ullmanns Enzyklopädie der technischen Chemie, 4. Auflage, Band 21, Seite 464 bekannt.

Durch die feine Verteilung der Dotierungskomponente im Aerosol, sowie die hohen Temperaturen (1.000 bis 2.400 °C) bei der anschließenden Flammenhydrolyse, bei der die Dotierungskomponenten unter Umständen weiter zerkleinert und/oder aufgeschmolzen werden, liegt das Dotierungsmedium während der Genese des pyrogenen Oxids feinverteilt in der Gasphase vor, so dass ein homogener Einbau der Dotierungskomponente in das pyrogene hergestellte Oxid möglich ist. Durch geeignete Wahl der Ausgangssalze und die Art der Prozeßführung ist aber auch die Erzielung einer in homogenen Verteilung möglich.

Mit dem erfindungsgemäßen Verfahren ist es möglich, alle bekannten pyrogen hergestellten Oxide (zum Beispiel SiO₂, TiO₂, Al₂O₃, B₂O₃, ZnO, In₂O₃, ZrO₂, Fe₂O₃, GeO₂, V₂O₅, SnO₂, WO₃, Nb₂O₅) mit anderen Metall- oder Metalloxiden oder deren Mischungen zu dotieren.

Durch die Wahl geeigneter Dotierungskomponenten kann man die Aggregat- beziehungsweise Agglomeratstruktur des pyrogenen Oxids beeinflussen.
Weiterhin kann man den pH-Wert des pyrogenen Oxids beeinflussen.

Katalytisch aktive Substanzen (zum Beispiel Cer oder Edelmetalle), die als Dotierungskomponente eingesetzt werden, können - wenn gewünscht - nahezu homogen in dem pyrogenen hergestellten Oxid verteilt werden.

Auch die Phasenumwandlung bei pyrogen hergestellten Oxiden, beispielsweise von Rutil zu Anatas im pyrogen hergestellten Titanoxid, kann durch Dotierung beeinflusst werden.

In einer Ausführungsform der Erfindung kann eine mittels Aerosol mit Aluminiumoxid dotierte, pyrogen hergestellte Kieselsäure eingesetzt werden, bei der die Basiskomponente eine pyrogen nach Art der Flammenoxidation oder bevorzugt, der Flammenhydrolyse, hergestellte Kieselsäure ist, die mit einer Dotierungskomponente von 1x10⁻⁴ und bis 20 Gew. % dotiert ist, wobei die Dotierungsmenge vorzugsweise im Bereich von 1 bis 10.000 ppm liegt und die Dotierungskomponente ein Salz oder eine Salzmischung des Aluminiums oder eine Suspension einer Aluminiumverbindung oder metallischen Aluminiums oder Mischungen davon ist, wobei die BET-Oberfläche des dotierten Oxides zwischen 5 und 600 m²/g, bevorzugt im Bereich zwischen 40 und 100 m²/g, liegt.

Die Kieselsäure kann eine DBP-Zahl von unter 100g/100g aufweisen.

Die mittels Aerosol mit Aluminiumoxid dotierten pyrogen hergestellten Kieselsäuren kann hergestellt werden, indem man in eine Flamme, wie sie zur pyrogenen Herstellung von Kieselsäuren nach der Art der Flammenoxidation oder bevorzugt der Flammenhydrolyse benutzt wird, ein Aerosol einspeist, das Aerosol vor der Reaktion mit dem Gasgemisch der Flammenoxidation beziehungsweise Flammenhydrolyse homogen mischt, dann das Aerosol-Gasgemisch in der Flamme abreagieren läßt und die entstandenen mit Aluminiumoxid dotierten pyrogen hergestellten Kieselsäuren in bekannter Weise vom Gasstrom abtrennt, wobei zur Herstellung des Aerosols eine wäßrige Lösung dient, die Salze oder Salzmischungen des Aluminiums oder das Metall selbst in gelöster oder suspendierter Form oder Mischungen davon enthält, wobei das Aerosol durch Vernebelung mittels einer Zweistoffdüse oder durch eine andere Art der Aerosolherstellung, vorzugsweise durch einen Aerosolgenerator nach der Ultraschallvernebelung, hergestellt wird.

Als Salze können beispielsweise eingesetzt werden: AlCl₃, Al₂(SO₄)₃, Al(NO₃)₃.

Ein weiterer Gegenstand der Erfindung ist die Verwendung der erfindungsgemäßen oberflächenmodifizierten dotierten pyrogen hergestellten Oxide als
- Verbesserung der Oberflächengüte in Beschichtungssystemen
- Verstärkerfüllstoff in Silikonkautschuk, Gummi und Harzen
- Ladungsstabilisator und Rieselhilfsmittel in Tonerpulver
- Rieselhilfsmittel (free-flow-agent)
- Antiblockingmittel, zum Beispiel in Folien
- UV-Blocker, zum Beispiel in Kosmetika
- Verdickungsmittel, zum Beispiel in Lacken und anderen Beschichtungssystemen
- Verdickungsmittel, zum Beispiel in Harzen wie Polyester

Durch die Oberflächenmodifizierung lassen sich die erfindungsgemäßen Produkte schneller und in höherer Konzentration in organische Systeme wie zum Beispiel Polyesterharz einarbeiten.

### Beispiele

Die Brenneranordnung, die in den Beispielen 1 bis 5 verwendet wird, ist in Figur 1 schematisch dargestellt.

Gemäß Figur 1 ist das Kernstück der Apparatur der Brenner 1 bekannter Bauart, wie er zur Herstellung von pyrogenen Oxiden üblicherweise verwendet wird.
Der Brenner 1 besteht aus dem Zentralrohr 2, das in die Düse 3, aus welcher der Hauptgasstrom in den Brennerraum strömt und dort abbrennt, mündet. Die innere Düse ist von der weiteren Ringdüse 4 (Manteldüse), aus der zur Vermeidung von Anbackungen Ring- oder Sekundär- Wasserstoff ausströmt, umgeben.
In dem Zentralrohr befindet sich das Axialrohr 5, das einige Zentimeter vor der Düse 3 des Zentralrohrs 2 endet. In das Axialrohr 5 wird das Aerosol eingespeist, wobei auf der letzten Strecke des Zentralrohres 2 der Aerosol-Gasstrom des Axialrohres 5 mit dem Gasstrom des Zentralrohres 2 homogen gemischt wird.
Das Aerosol wird in dem Aerosol-Generator 6 (Ultraschallvernebler) erzeugt. Als Aerosoledukt wird eine wäßrige Salzlösung, die das zu dotierende Metall oder Metalloid als Salz in gelöster oder dispergierter/suspendierter Form enthält, verwendet.
Das von dem Aerosol-Generator 6 erzeugte Aerosol wird mittels eines Traggasstromes durch die Heizzone 7, wo das Wasser verdampft und in der Gasphase kleine Salzkristalle in feinverteilter Form zurückbleiben, geleitet. Eine derartige Vorrichtung ist bekannt aus DE 196 50 500 A1.

### Beispiel 1 (Dotierung mit Cer) (Edukt für die Oberflächenbehandlung)

Es werden 4,44 kg/h SiCl₄ bei ca. 130°C verdampft und in das Zentralrohr des Brenners eingeführt. In das Zentralrohr werden zusätzlich 3 Nm³/h Primär-Wasserstoff und 8,0 Nm³/h Luft eingespeist. Das Gasgemisch strömt aus der inneren Düse des Brenners und brennt in den Brennerraum und das sich daran anschließende wassergekühlte Flammrohr.
In die Manteldüse, die die Zentraldüse umgibt, werden zur Vermeidung von Anbackungen an den Düsen 0,5 Nm³/h Mantel- oder Sekundär- Wasserstoff eingespeist.
In den Brennerraum werden zusätzlich 12 Nm³/h Sekundär-Luft eingespeist.
Aus dem Axialrohr strömt das Aerosol in das Zentralrohr.
Das Aerosol ist ein Cersalz-Aerosol, welches durch Ultraschallvernebelung einer 5 % wäßrigen Cer(III)-Chlorid-Lösung in dem Aerosol-Generator in einer Menge von 210 g/h erzeugt wird.

Das Cersalz-Aerosol wird mit Hilfe des Traggases von 0,5 Nm³/h Luft durch eine beheizte Leitung geführt, wobei das Aerosol bei Temperaturen um ca. 180°C in ein Gas und ein Salzkristall-Aerosol übergeht.

Am Brennermund beträgt die Temperatur des Gasgemisches (SiCl₄-Luft-Wasserstoff, Aerosol) 180°C.

Die Reaktionsgase und die entstandene mit Cer dotierte, pyrogen hergestellte Kieselsäure werden durch Anlegen eines Unterdrucks durch ein Kühlsystem gesaugt und dabei auf ca. 100 bis 160 °C abgekühlt. In einem Filter oder Zyklon wird der Feststoff von dem Gasstrom abgetrennt.

Die dotierte, pyrogen hergestellte Kieselsäure fällt als weißes feinteiliges Pulver an. In einem weiteren Schritt werden bei erhöhter Temperatur durch Behandlung mit wasserdampfhaltiger Luft die anhaftenden Salzsäurereste von der Kieselsäure entfernt.

Die BET-Oberfläche der dotierten, pyrogen hergestellten Kieselsäure beträgt 143 m²/g.
Die Herstellparameter sind in der Tabelle 1 zusammengefasst.

Weitere analytische Daten der erhaltenen pyrogenen Kieselsäure sind in der Tabelle 2 angegeben.

### Beispiel 2 (Dotierung mit Cer) (Edukt für die Oberflächenbehandlung)

Es werden 4,44 kg/h SiCl₄ bei ca. 130°C verdampft und in das Zentralrohr des Brenners eingeführt. In das Zentralrohr werden zusätzlich 3 Nm³/h Primär-Wasserstoff und 8,7 Nm³/h Luft eingespeist. Das Gasgemisch strömt aus der inneren Düse des Brenners und brennt in den Brennerraum und das sich daran anschließende wassergekühlte Flammrohr.
In die die Zentraldüse umgebende Manteldüse werden zur Vermeidung von Anbackungen an den Düsen 0,5 Nm³/h Mantel- oder Sekundär-Wasserstoff eingespeist. In den Brennerraum werden zusätzlich 12 Nm³/h Sekundär-Luft eingespeist.

Aus dem Axialrohr strömt das Aerosol in das Zentralrohr. Das Aerosol ist ein Cersalz-Aerosol, welches durch Ultraschallvernebelung aus einer 5 % wäßrigen Cer(III)-Chlorid-Lösung im Aerosol-Generator in einer Menge von 205 g/h erzeugt wird.

Das Cersalz-Aerosol wird mit Hilfe des Traggases von 0,5 Nm³/h Luft durch eine beheitzte Leitung geführt, wobei das Aerosol bei Temperaturen um ca. 180 °C in ein Gas und ein Salzkristall-Aerosol übergeht.

Am Brennermund beträgt die Temperatur des Gasgemisches (SiCl₄-Luft-Wasserstoff, Aerosol) 180°C.

Die Reaktionsgase und die entstandene mit Cer dotierte, pyrogen hergestellte Kieselsäure werden durch Anlegen eines Unterdrucks durch ein Kühlsystem gesaugt und dabei auf ca. 100 bis 160 °C abgekühlt. In einem Filter oder Zyklon wird der Feststoff von dem Gasstrom abgetrennt.

Die dotierte, pyrogene Kieselsäure fällt als weißes feinteiliges Pulver an. In einem weiteren Schritt werden bei erhöhter Temperatur durch Behandlung mit wasserdampfhaltiger Luft die anhaftende Salzsäurereste von der pyrogenen Kieselsäure entfernt.

Die BET-Oberfläche der dotierten pyrogenen Kieselsäure beträgt 217 m²/g.
Die Herstellparameter sind in der Tabelle 1 zusammengefasst. Weitere analytische Daten der erhaltenen pyrogenen Kieselsäure sind in der Tabelle 2 angegeben.

### Beispiel 3 (Dotierung mit Kaliumsalzen) (Edukt für die Oberflächenbehandlung)

Es werden 4,44 kg/h SiCl₄ bei ca. 130 °C verdampft und in das Zentralrohr des Brenners eingeführt. In das Zentralrohr werden zusätzlich 3 Nm³/h Primär-Wasserstoff und 8,7 Nm³/h Luft eingespeist. Das Gasgemisch strömt aus der inneren Düse des Brenners und brennt in den Brennerraum und das sich daran anschließende wassergekühlte Flammrohr.
In die die Zentraldüse umgebende Manteldüse werden zur Vermeidung von Anbackungen an den Düsen 0,5 Nm³/h Mantel- oder Sekundär- Wasserstoff eingespeist.

Aus dem Axialrohr strömt das Aerosol in das Zentralrohr.
Das Aerosol ist ein Kaliumsalz-Aerosol, welches durch Ultraschallvernebelung einer 0,5 % wäßrigen Kaliumchlorid-Lösung in dem Aerosol-Generator in einer Menge von 215 g/h erzeugt wird.

Das Kaliumsalz-Aerosol wird mit Hilfe des Traggases von 0,5 Nm³/h Luft durch eine beheizte Leitung geführt, wobei das Aerosol bei Temperaturen um 180°C in ein Gas und ein Salzkristall-Aerosol übergeht.
Am Brennermund beträgt die Temperatur des Gasgemisches (SiCl₄-Luft-Wasserstoff, Aerosol) 180°C.

Die Reaktionsgase und die entstandene mit Kalium dotierte, pyrogen hergestellte Kieselsäure werden durch Anlegen eines Unterdrucks durch ein Kühlsystem gesaugt und dabei der Partikel-Gasstrom auf ca. 100 bis 160°C abgekühlt. In einem Filter oder Zyklon wird der Feststoff von dem Gasstrom abgetrennt.

Die dotierte pyrogene Kieselsäure fällt als weißes feinteiliges Pulver an. In einem weiteren Schritt werden bei erhöhter Temperatur durch Behandlung mit wasserdampfhaltiger Luft die anhaftenden Salzsäurereste von der pyrogenen Kieselsäure entfernt.
Die BET-Oberfläche der dotierten pyrogenen Kieselsäure beträgt 199 m²/g.
Die Herstellparameter sind in der Tabelle 1 zusammengefasst. Weitere analytische Daten der erhaltenen Kieselsäure sind in der Tabelle 2 angegeben.

**Tabelle 1**

| Experimentelle Bedingungen bei der Herstellung dotierter pyrogener Kieselsauren. | | | | | | | | | | | |
|---|---|---|---|---|---|---|---|---|---|---|---|
| Nr. | SiCl₄ kg/h | Primär-luft Nm³/h | Sek-Luft Nm³/h | H₂ Kern Nm³/h | H₂ Mantel Nm³/h | N₂ Mantel Nm³/h | Gas-Temp. C | Salz-lösung | Aerosol menge kg/h | Luft Aerosol Nm³/h | BET m²/g |
| 1 | 4,44 | 8,0 | 12 | 3 | 0,5 | 0,3 | 180 | 5%CeCl₃ | 0,210 | 0,5 | 143 |
| 2 | 4,44 | 8,7 | 12 | 3 | 0,5 | 0,3 | 180 | 5%CeCl₃ | 0,205 | 0,5 | 217 |
| 3 | 4,44 | 8, 7 | 12 | 3 | 0, 5 | 0, 3 | 180 | 0,5%KCL | 0, 215 | 0, 5 | 199 |

| | | | | | | | | | | | |
|---|---|---|---|---|---|---|---|---|---|---|---|
| Erläuterung: Primärluft = Luftmenge im Zentralrohr; Sek-Luft = Sekundärluft; H₂-Kern = Wasserstoff im Zentralrohr; Gas-Temp. Gastemperatur an der Düse des Zentralrohres; Aerosolmenge = Massenstrom der in Aerosolform überführten Salzlösung; Luft-Aerosol = Traggasmenge (Luft) des Aerosols | | | | | | | | | | | |

**Tabelle 2**

| Analytische Daten der nach Beispiel 1 bis 3 erhaltenen Proben | | | | | | | | | | | | | |
|---|---|---|---|---|---|---|---|---|---|---|---|---|---|
| Nr. | BET (m²/g) | Ce Gew. µg/g | K Gew. µlg/g | Cl-Gehalt ppm | TV Gew. % | GV Gew. % | Cl ppm | Grindo meter µm | Sedi Vol Vol% | Effekt ivität | pH 4% Sus. | Stampf dichte g/l | Verdickung in Ludopal (mPas) |
| Dotierung mit Cersalz und Vergleichsbeispiele | | | | | | | | | | | | | |
| 1 | 143 | 1860 | < 5 | | 0,09 | 1,33 | | 20 | 0 | 690 | 3,93 | 26 | 1990 |
| 2 | 217 | 2350 | < 5 | 112 | 0,22 | 2,23 | 112 | 40 | 50 | 548 | 3,67 | 29 | 3680 |

| Dotierung mit Kaliumsalz und Vergleichsbeispiel | | | | | | | | | | | | | |
|---|---|---|---|---|---|---|---|---|---|---|---|---|---|
| 3 | 199 | | 300 | 55 | 0,32 | 1,86 | 55 | 60 | 50 | 451 | 4,83 | 32 | 2575 |

| | | | | | | | | | | | | | |
|---|---|---|---|---|---|---|---|---|---|---|---|---|---|
| Erläuterung: Cergehalt als Ce in µg/g (ppm); Kaliumgehalt als K in µg/g (ppm); TV = Trocknungsverlust (2h bei 105°C, in Anlehnung an DIN/ISO 787/II, ASTM D 280, JIS K 5101/21); GV = Glühverlust (2h bei 1000 °C, in Anlehnung an DIN 55921, ASTM D 1208, JIS K 5101/23, bezogen auf die 2h bei 105 °C getrocknete Substanz); Grindometer = Grindometerwert; Sedi-Vol = Sedimentvolumen; Effektivität = Trübungsmessung: Die Methode der Effektivitätsbestimmung (Trübungsmessung) ist beschrieben in Patentschrift DE 44 00 170; die nach der gleichen Methode hergestellte Suspension wird nach weiteren 5 Minuten Wartezeit zur Sedimentvolumenbestimmung benutzt; Stampfdichte in Anlehnung an DIN/ISO 787/IX, JIS K 5101/18 (nicht gesiebt). Verdickung in Polyester-Bezugssystem: Beschrieben in EP-A 0 015 315 | | | | | | | | | | | | | |

### Beispiel 4 (Edukt für die Oberflächenbehandlung)

Herstellung einer mittels Aerosol mit Aluminiumoxid dotierten pyrogen hergestellten Kieselsäure mit niedriger BET-Oberfläche.

5,25 kg/h SiCl₄ werden bei ca. 130 °C verdampft und in das Zentralrohr 2 des Brenners 1 bekannter Bauart überführt. In das Zentralrohr 2 werden zusätzlich 3,47 Nm³/h (Primär-) Wasserstoff und 3,76 Nm³/h Luft sowie 0,95 Nm³/h Sauerstoff eingespeist. Das Gasgemisch strömt aus der Düse 3 des Brenners 1 und brennt in den Brennerraum und das daran anschließende wassergekühlte Flammrohr.

In die Ringdüse 4 werden 0,5 Nm³/h (Mantel- oder Sekundär-) Wasserstoff und 0,3 Nm³/h Stickstoff eingespeist.

In den Brennerraum werden noch zusätzlich 20 Nm³/h (Sekundär-) Luft eingespeist.

Aus dem Axialrohr 5 strömt der zweite Gasstrom in das Zentralrohr 2.

Der zweite Gasstrom besteht aus dem Aerosol, das durch Ultraschallvernebelung von AlCl₃-Lösung in der separaten Vernebelungseinheit 6 erzeugt wird. Der Aerosolgenerator 6 vernebelt dabei 460 g/h 2,29-prozentige wäßrige Aluminiumchloridlösung. Das Aluminiumchloridaerosol wird mit Hilfe des Traggases von 0,5 Nm³/h Luft durch die geheizte Leitung geführt, wobei das wäßrige Aerosol bei Temperaturen um ca. 180 °C in ein Gas und ein Salzkristall übergeht.

Am Brennermund beträgt die Temperatur des Gasgemisches (SiCl₄-Luft-Wasserstoff, Wasser-Aerosol) 180°C.

Die Reaktionsgase und die mittels Aerosol mit Aluminiumoxid dotierte pyrogen hergestellte Kieselsäure werden durch Anlegen eines Unterdruckes durch ein Kühlsystem gesaugt. Dabei wird der Partikel-Gasstrom auf ca. 100 bis 160 °C abgekühlt. In einem Zyklon wird der Feststoff von dem Abgasstrom abgetrennt.

Die mittels Aerosol mit Alumiumoxid dotierte pyrogen hergestellte Kieselsäure fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt.

Die mit BET-Oberfläche der mittels Aerosol mit Aluminiumoxid dotierten pyrogenen Kieselsäure beträgt 55 m²/g.

Die Herstellbedingungen sind in Tabelle 3 aufgeführt. Weitere analytische Daten der Kieselsäure werden in Tabelle 4 angegeben.

### Beispiel 5 (Edukt für die Oberflächenbehandlung)

Herstellung einer mittels Aerosol mit Aluminiumoxid dotierten pyrogen hergestellten Kieselsäure mit hoher BET-Oberfläche.

4,44 kg/h SiCl₄ werden bei ca. 130 °C verdampft und in das Zentralrohr 2 des Brenners 1 bekannter Bauart überführt. In das Zentralrohr 2 werden zusätzlich 3,15 Nm³/h (Primär-) Wasserstoff und 8,2 Nm³/h Luft eingespeist. Das Gasgemisch strömt aus der Düse 3 des Brenners 1 und brennt in den Brennerraum und das daran anschließende wassergekühlte Flammrohr.

In die Ringdüse 4 werden 0,5 Nm³/h (Mantel- oder Sekundär-) Wasserstoff und 0,3 Nm³/h Stickstoff eingespeist.

In den Brennerraum werden noch zusätzlich 12 Nm³/h (Sekundär-) Luft eingespeist.

Aus dem Axialrohr 5 strömt der zweite Gasstrom in das Zentralrohr 2.

Der zweite Gasstrom besteht aus dem Aerosol, das durch Ultraschallvernebelung von AlCl₃-Lösung in der separaten Vernebelungseinheit 6 erzeugt wird. Der Aerosolgenerator 6 vernebelt dabei 450 g/h 2,29-prozentige wäßrige Aluminiumchloridlösung. Das Aluminiumchloridaerosol wird mit Hilfe des Traggases von 0,5 Nm³/h Luft durch die geheizte Leitung geführt, wobei das wäßrige Aerosol bei Temperaturen um ca. 180 °C in ein Gas und ein Salzkristall übergeht.

Am Brennermund beträgt die Temperatur des Gasgemisches (SiCl₄-Luft-Wasserstoff, Wasser-Aerosol) 180 °C.

Die Reaktionsgase und die mittels Aerosol mit Aluminiumoxid dotierte pyrogen hergestellte Kieselsäure werden durch Anlegen eines Unterdruckes durch ein Kühlsystem gesaugt. Dabei wird der Partikel-Gasstrom auf ca. 100 bis 160 °C abgekühlt. In einem Zyklon wird der Feststoff von dem Abgasstrom abgetrennt.

Die mittels Aerosol mit Alumiumoxid dotierte pyrogen hergestellte Kieselsäure fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt.

Die mit BET-Oberfläche der mittels Aerosol mit Aluminiumoxid dotierten pyrogenen Kieselsäure beträgt 203 m²/g.

Die Herstellbedingungen sind in Tabelle 3 aufgeführt. Weitere analytische Daten der Kieselsäure werden in Tabelle 4 angegeben.

**Tabelle 3**

| Experimentelle Bedingungen bei der Herstellung von mit Aluminiumoxid dotierter pyrogener Kieselsäure | | | | | | | | | | | | |
|---|---|---|---|---|---|---|---|---|---|---|---|---|
| Nr. | SiCl₄ kg/h | Primär-luft Nm³/h | O₂ Kern Nm³/h | Sek-Luft Nm³/h | H₂ Kern Nm³/h | H₂ Mantel Nm³/h | N₂ Mantel Nm³/h | Gas-Temp. °C | Salz-lösung | Aerosol menge kg/h | Luft Aerosol Nm³/h | BET m²/g |
| 4 | 5,25 | 3,76 | 0,95 | 20 | 3,47 | 0,5 | 0,3 | 156 | 2,29% wäßrige AlCl₃ | 0,46 | 0,5 | 55 |
| 5 | 9,49 | 8,2 | 0 | 12 | 3,15 | 0,5 | 0,3 | 180 | 2,29% wäßrige AlCl₃ | 0,45 | 0,5 | 203 |

| | | | | | | | | | | | | |
|---|---|---|---|---|---|---|---|---|---|---|---|---|
| Erläuterung: Primärluft = Luftmenge im Zentralrohr; Sek-Luft = Sekundärluft; H2-Kern = Wasserstoff im Zentralrohr; Gas-Temp. = Gastemperatur an der Düse des Zentralrohrs; Aerosolmenge = Massenstrom der in Aerosolform überführten Salzlösung; Luft-Aerosol = Traggasmenge (Luft) des Aerosols; | | | | | | | | | | | | |

**Tabelle 4**

| Analytische Daten der nach Beispiel 1 bis 2 erhaltenen Proben | | | | | | | |
|---|---|---|---|---|---|---|---|
| | BET m²/g | pH-Wert 4% Sus. | Stampf-dichte g/l | DBP-Absorption g/100g | Al₂O₃-Gehalt Gew.% | SiO₂-Gehalt Gew.% | Chlorid-gehalt ppm |
| Beispiel Nr. 4 | 55 | 4,39 | 94 | 81 | 0,187 | 99,79 | 89 |
| Beispiel Nr. 5 | 203 | 4,15 | 24 | 326 | 0,27 | 99,67 | |

| Dazu im Vergleich | | | | | | | |
|---|---|---|---|---|---|---|---|
| Aerosil OX 50 | 50 | 13,8 bis 4,8 | 130 | ca. 160 | < 0,08 | > 99,8 | < 250 |

| | | | | | | | |
|---|---|---|---|---|---|---|---|
| Erläuterung: pH 4% Sus. = pH-Wert der vierprozentigen wäßrigen Suspension | | | | | | | |

Ein Oxid gemäß Beispiel 4 wird in einem geeigneten Mischgefäß unter intensivem Mischen, gegebenenfalls zunächst mit Wasser oder verdünnter Säure und anschließend mit einem oder mehreren oder einem Gemisch aus mehreren Oberflächenmodifizierungs-reagentien (Hydrophobierungsmittel) besprüht, gegebenenfalls 15 bis 30 Minuten nachgemischt und bei einer Temperatur von 100 bis 400 °C über einen Zeitraum von 0,5 - 6 h getempert. Die Temperung kann unter Schutzgas erfolgen.

Die angewandten Mengenverhältnisse sind in der Tabelle 5 aufgeführt.
Die physikalisch-chemischen Kenndaten der erhaltenen oberflächenmodifizierten Oxide sind in der Tabelle 6 aufgeführt.

**Tabelle 5**

| Bezeichnung | Hydrophob. mittel* | Teile/100 Teile Oxid | H₂O-Zusatz Teile/100 Teile Oxid | Temperzeit (h) | Temperatur (°C) |
|---|---|---|---|---|---|
| Beispiel 6 | Si 108 | 5 | 1 ** | 2 | 120 |
| Beispiel 7 | HMDS | 5 | 1 | 2 | 140 |
| Beispiel 8 | HMDS | 10 | 2 | 2 | 140 |
| Beispiel 9 | PDMS | 7,5 | -- | 2 | 400 |
| Beispiel 10 | AMEO | 7 | 2 | 3 | 130 |

| | | | | | |
|---|---|---|---|---|---|
| * Si 108: Octyltrimethoxysilan HMDS: Hexamethyldisilazan PDMS: Polydimethylsiloxan, hier Rhodorsil 47 V 100 AMEO: γ- Aminopropyltriethoxysilan ** Hier wurde anstelle von H₂O 0,01 n HCL eingesetzt | | | | | |

**Tabelle 6**

| Physikalisch-chemische Daten der hergestellten Oxide | | | | | | |
|---|---|---|---|---|---|---|
| Bezeichnung | BET-Oberfläche (m²/g) | PH-Wert | Stampfdichte (g/1) | C-Gehalt (%) | Trocknungsverlust (%) | Glühverlust (%) |
| Beispiel 6 | 46 | 6, 4 | 92 | 2,0 | 0,8 | 2,9 |
| Beispiel 7 | 51 | 7,2 | 104 | 0,8 | 0,1 | 0,9 |
| Beispiel 8 | 48 | 6,2 | 107 | 0,9 | 0,2 | 0,8 |
| Beispiel 9 | 45 | 7,2 | 104 | 2,0 | 0,1 | 2,1 |
| Beispiel 10 | 49 | 9, 6 | 94 | 1,1 | 0,8 | 2, 0 |

## Patentansprüche

1. Oberflächenmodifizierte, mittel Aerosol dotierte, pyrogen hergestellte Oxide, **dadurch gekennzeichnet**, das sie mit einer oder mehreren Verbindungen aus den folgenden Gruppen oberflächenmodifiziert sind:
a) Organosilane des Types (RO)₃Si(CₙH₂ₙ₊₁) und
(RO)₃Si(CₙH₂ₙ₋₁)
R = Alkyl
n = 1 - 20
b) Organosilane des Types R'ₓ(RO)_{y}Si(CₙH₂ₙ₊₁) und
(RO)₃Si(CₙH₂ₙ₊₁)
R =Alkyl
R' =Alkyl
R' =Cycloalkyl
n =1 - 20
x+y = 3
x =1,2
y =1,2
c) Halogenorganosilane des Types X₃Si(CₙH₂ₙ₊₁) und
X₃Si(CₙH₂ₙ₋₁)
X = Cl, Br
n = 1 - 20
d) Halogenorganosilane des Types X₂(R')Si(CₙH₂ₙ₊₁) und
X₂(R')Si(CₙH₂ₙ₋₁)
X =Cl, Br
R' =.Alkyl,
R' =Cycloalkyl
n =1 - 20
e) Halogenorganosilane des Types X(R')₂Si(CₙH₂ₙ₊₁)) und
X(R')₂Si(CₙH₂ₙ₋₁)
X =Cl, Br
R' = Alkyl
R' = Cycloalkyl
n =1 - 20
f) Organosilane des Types (RO)₃Si(CH₂)ₘ-R'
R = Alkyl
m =0,1 - 20
R' =Methyl-, Aryl (z.B. -C₆H₅, substituierte Phenylreste)
-C₄F₉, OCF₂-CHF-CF₃, -C₆F₁₃, -O-CF₂-CHF₂
-NH₂, -N₃, -SCN, -CH=CH₂, -NH-CH₂-CH₂-NH₂
-N-(CH₂-CH₂-NH₂)
-OOC(CH₃)C = CH₂
-OCH₂-CH(O)CH₂
-NH-CO-N-CO-(CH₂)₅
-NH-COO-CH₃, -NH-COO-CH₂-CH₃, -NH-(CH₂)₃Si(OR)₃
-Sₓ-(CH₂)₃Si(OR)₃
-SH
NR'R''R''' (R' = Alkyl, Aryl; R'' = H, Alkyl, Aryl; R''' = H, Alkyl, Aryl, Benzyl, C₂H₄NR'''' R'"''' mit R'''' = A, Alkyl und R''''' = H, Alkyl)
g) Organosilane des Typs (R")ₓ(RO)_{y}Si(CH₂)ₘ-R'
R" = Alkyl x+y = 2
= Cycloalkyl x = 1,2
y = 1,2
m = 0,1 bis 20
R' =Methyl-, Aryl (z.B. -C₆H₅ ,substituierte Phenylreste)
-C₄F₉, -OCF₂-CHF-CF₃, -C₆F₁₃, -O-CF₂-CHF₂
-NH₂, -N₃, -SCN, -CH=CH₂, -NH-CH₂-CH₂-NH₂,
-N- (CH₂-CH₂-NH₂)₂
-OOC(CH₃)C = CH₂
-OCH₂-CH(O)CH₂
-NH-CO-N-CO-(CH₂)₅
-NH-COO-CH₃, -NH-COO-CH₂-CH₃, -NH-
(CH₂)₃Si(OR)₃
-Sₓ-(CH₂)₃Si(OR)₃
-SH
-NR'R''R''' (R' = Alkyl, Aryl; R'' = H, Alkyl, Aryl; R''' = H, Alkyl, Aryl, Benzyl, C₂H₄NR'''' R""' mit R"" = A, Alkyl und
R''''' = H, Alkyl)
h) Halogenorganosilane des Types X₃Si(CH₂)ₘ-R'
X =Cl, Br
m =0,1 - 20
R' =Methyl-, Aryl (z.B. -C₆H₅, substituierte Pheneylreste)
-C₄F₉, -OCF₂-CHF-CF₃, -C₆F₁₃, -O-CF₂-CHF₂
-NH₂, -N₃, -SCN, -CH=CH₂,
-NH-CH₂-CH₂-NH₂,
-N-(CH₂-CH₂-NH₂)₂
-OOC(CH₃)C = CH₂
-OCH₂-CH(O)CH₂
-NH-CO-N-CO-(CH₂)₅
-NH-COO-CH₃, -NH-COO-CH₂-CH₃, -NH-
(CH₂)₃Si(OR) 3
-Sₓ-(CH₂)₃Si(OR)₃
-SH
i) Halogenorganosilane des Types (R)X₂Si(CH₂)ₘ-R'
X =Cl, Br
R =Alkyl, wie Methyl,- Ethyl-, Propyl-
m =0,1 - 20
R' =Methyl-, Aryl (z.B. -C₆H₅, substituierte Phenylreste)
-C₄F₉, -OCF₂-CHF-CF₃, -C₆F₁₃, -O-CF₂-CHF₂
-NH₂, -N₃, -SCN, -CH=CH₂, , -NH-CH₂-CH₂-NH₂,
-N- (CH₂-CH₂-NH₂)
-OOC(CH₃)C = CH₂
-OCH₂-CH(O)CH₂
-NH-CO-N-CO-(CH₂)₅
-NH-COO-CH₃, -NH-COO-CH₂-CH₃, -NH-
(CH₂)₃Si(OR)₃
-Sₓ-(CH₂)₃Si(OR)₃
-SH
j) Halogenorganosilane des Types (R)₂X Si(CH₂)ₘ-R'
X =Cl, Br
R =Alkyl
m =0,1 - 20
R' =Methyl-, Aryl (z.B. -C₆H₅, substituierte Phenylreste)
-C₄F₉, -OCF₂-CHF-CF₃, -C₆F₁₃, -O-CF₂-CHF₂
-NH₂, -N₃, -SCN, -CH=CH₂, -NH-CH₂-CH₂-NH₂,
-N- (CH₂-CH₂-NH₂)₂
-OOC(CH₃)C = CH₂
-OCH₂-CH(O)CH₂
-NH-CO-N-CO-(CH₂)₅
-NH-COO-CH₃, -NH-COO-CH₂-CH₃, -NH-(CH₂)₃Si(OR)₃
-Sₓ-(CH₂)₃Si(OR)₃
-SH
k) Silazane des Types 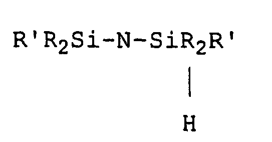 R = Alkyl
R' =Alkyl, Vinyl
l) Cyclische Polysiloxane des Types D 3, D 4, D 5 zum Beispiel Octamethylcyclotetrasiloxan = D 4 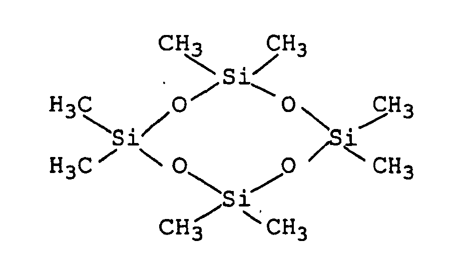
m) Polysiloxane beziehungsweise Silikonöle des Types 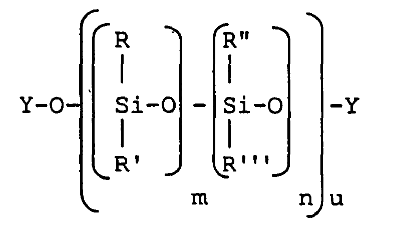 m = 0, 1, 2, 3, ...∞
n = 0, 1, 2, 3, ...∞
u = 0, 1, 2, 3, ...∞
Y=CH₃, H, CₙH₂ₙ₊₁ n=1-20
Y=Si(CH₃)₃, Si(CH₃)₂H
Si (CH₃) ₂OH, Si (CH₃) ₂ (OCH₃)
Si (CH₃) ₂ (CₙH₂ₙ₊₁) n=1-20
R = Alkyl, Aryl, (CH₂)ₙ-NH₂, H
R' = Alkyl, Aryl, (CH₂)ₙ-NH₂, H
R" - Alkyl, Aryl, (CH₂) n-NH₂, H
R"' = Alkyl, Aryl, (CH₂) ₙ-NH₂, H

2. Oberflächenmodifizierte, mittels Aerosol dotierte, pyrogen hergestellte Oxide gemäß Anspruch 1, **dadurch gekennzeichnet, dass** die Oxide Oxide aus der Gruppe Gruppe SiO₂, Al₂O₃, TiO₂, BeO₃, ZrO₂, In₂O₃, ZnO, Fe₂O₃, Nb₂O₅, V₂O₅, WO₃, SnO₂, GeO₂ sind.

3. Verfahren zur Herstellung der oberflächenmodifizierten Oxide gemäss Anspruch 1 oder 2, **dadurch gekennzeichnet, daß** man mittels Aerosol dotiertes, pyrogen hergestellte Oxide in einem geeigneten Mischgefäß vorlegt unter intensivem Mischen die Oxide, gegebenenfalls zunächst mit Wasser und/oder Säure und anschließend mit einem Oberflächenmodifizierungs-reagens oder einem Gemisch aus mehreren Oberflächenmodi-fizierungsreagentien besprüht, gegebenenfalls 15 bis 30 Minuten nachmischt und bei einer Temperatur von 100 bis 400 °C über einen Zeitraum von 1 bis 6 h tempert.

4. Verwendung der oberflächenmodifizierten Oxide gemäß den Ansprüchen 1 oder 2 als Verstärkerfüllstoff.

## Claims

1. Surface-modified, pyrogenically produced aeresol-doped oxides **characterized in that** they are surface-modified with one or more compounds from the following groups:
a) Organosilanes of the type (RO)₃Si(CₙH₂n+1) and
(RO)₃Si(CₙH₂ₙ₋₁)
R=alkyl
n=1-20
b) Organosilanes of the type R'ₓ(RO)_{y}Si(CₙH₂ₙ₊₁) and
(RO) ₃Si (CₙH₂₊₁)
R=alkyl
R'=alkyl
R'=cycloalkyl
N=1-20
x+y=3
x=1, 2
y=1, 2
c) Halogen organosilanes of the type X₃Si(CₙH₂ₙ₊₁) and
X₃Si (CₙH₂ₙ₋₁)
X = Cl, Br
n=1-20
d) Halogen organosilanes of the type X₂(R')Si(CₙH₂ₙ₊₁) and
X2(R')Si(CₙH₂ₙ₋₁)
X = C1, Br
R'=alkyl
R'=cycloalkyl
n=1-20
e) Halogen organosilanes of the type x(R')₂Si(CₙH₂ₙ₊₁) and
X (R' ) ₂Si (CₙH₂ₙ₋₁)
X = C1, Br
R'=alkyl
R'=cycloalkyl
n=1-20
f) Organosilanes of the type (RO)₃Si(CH₂)ₘ-R'
R=alkyl
m=0.1-20
R'=methyl-, aryl (e.g., -C₆H₅, substituted phenyl groups)
-C₄F₉, OCF₂-CHF-CF₃, -C₆F₁₃, -O-CF₂-CHF₂
-NH₂, -N₃ , -SCN, -CH=CH₂, -NH-CH₂-CH₂-NH₂,
-N- (CH₂-CH₂-CH₂NH₂)₂
-OOC(CH₃)C=CH₂
-OCH₂-CH (O) CH₂
-NH-CO-N-CO-(CH₂)₅
-NH-COO-CH₃, -NH-COO-CH₂-CH₃, -NH- (CH₂)₃Si(OR)₃
-Sₓ- (CH₂) ₃Si (OR) ₃
-SH
-NR'R"R "'(R'=alkyl, aryl; R" - H, alkyl, aryl; R'" - H, alkyl, aryl, benzyl, C₂H₄NR" "R'" " with R""=A, alkyl and R'"" - H, alkyl
g) Organosilanes of the type (R")ₓ(RO)_{y}Si(CH₂)ₘ-R'
R"=alkyl x+y=2
=cyclolalkyl x=1, 2
y=1, 2
m=0.1 to 20
R'=methyl-, aryl (e.g., -C₆H₅, substituted phenyl groups)
-C₄F₉, -OCF₂-CHF-CF₃, -C₆F₁₃, -O-CF₂-CHF₂
-NH₂, -N₃, -SCN, -CH=CH₂, -NH-CH₂-CH₂-NH₂, -N- (CH₂-CH₂-NH₂)₂
-OOC (CH₃) C=CH₂
-OCH₂-CH(O)CH₂
-NH-CO-N-CO-(CH₂)₅
-NH-COO-CH₃ , -NH-COO-CH₂-CH₃, -NH-
(CH₂) ₃Si (OR) ₃
-Sₓ- (CH₂)₃Si(OR)₃
-SH
-NR'R"R"'(R'=alkyl, aryl; R" - H, alkyl, aryl; R'" = H, alkyl, aryl, benzyl, C₂H₄NR" "R' " " with R" " = A, alkyl and R' " " = H, alkyl)
h) Halogen organosilanes of the type X₃Si(CH₂)ₘ-R'
X = Cl, Br
m=0.1-20
R'=methyl-, aryl (e.g., -C₆H₅, substituted phenyl groups)
-C₄F₉, -OCF₂-CHF-CF₃, -C₆F₁₃, -O-CF₂-CHF₂
-NH₂, -N₃, -SCN, -CH=CH₂, -NH-CH₂-CH₂-
-NH₂ , -N-(CH₂-CH₂-NH₂)₂
-OOC(CH₃)C=CH₂
-OCH₂-CH (O) CH₂
-NH-CO-N-CO-(CH₂)₅
-NH-COO-CH₃ , -NH-COO-CH₂-CH₃, -NH-(CH₂)₃Si(OR)₃
-Sₓ- (CH₂) ₃Si (OR) 3
-SH
i) Halogen organosilanes of the type (R)X₂Si(CH₂)ₘ-R'
X = Cl, Br
R=alkyl such as methyl, ethyl, propyl
m=0.1-20
R'=methyl-, aryl (e.g., -C₆H₅, substituted phenyl radicals)
-C₄F₉, -OCF₂-CHF-CF₃, -C₆F₁₃, -O-CF₂-CHF₂
-NH₂, -N₃, SCN, -CH=CH₂, -NH-CH₂-CH₂-NH₂, -N-(CH₂-CH₂-NH₂)₂
-OOC(CH₃)C=CH₂
-OCH₂-CH (O) CH₂
-NH-CO-N-CO- (CH₂) ₅
-NH-COO-CH₃ , -NH-COO-CH₂-CH₃, -NH-
(CH₂)₃Si(OR)₃
-Sₓ- (CH₂) ₃Si (OR) ₃
-SH
j) Halogen organosilanes of the type (R)₂XSi(CH₂)ₘ-R'
X = Cl, Br
R=alkyl
m=0.1-20
R'=methyl-, aryl (e.g., -C₆H₅, substituted phenyl radicals)
-C₄F₉, -OCF₂-CHF-CF₃, -C₆F₁3, -O-CF₂-CHF₂
-NH₂, -N₃, -SCN, -CH=CH₂, -NH-CH₂-CH₂-NH₂, -N- (CH₂-CH₂-NH₂) ₂
-OOC ( CH₃ ) C=CH₂
-OCH₂-CH ( O ) CH₂
-NH-CO-N-CO-(CH₂)₅
-NH-COO-CH₃ , -NH-COO-CH₂-CH₃, -NH-(CH₂)₃Si(OR)₃
-Sₓ-(CH₂)₃Si(OR)₃
-SH
k) Silazanes of the type 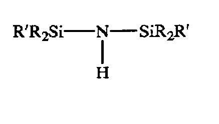 R=alkyl
R'=alkyl, vinyl
l) Cyclic polysiloxanes of the type D 3, D 4, D 5, e.g. octamethylcyclotetrasiloxane=D4 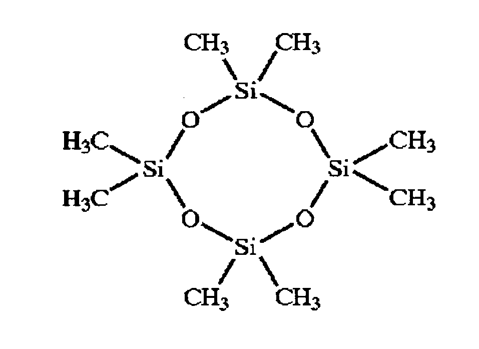
m) Polysiloxanes or silicone oils of the type 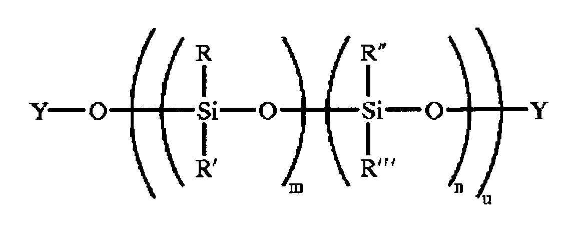 m=O, 1, 2, 3,
n=0, 1, 2, 3,
u=0, 1, 2, 3,
Y = CH₃, H, CₙHzₙ₊₁ n=1-20
Y = Si(CH₃)₃, Si(CH₃)₂H
Si(CH₃)₂OH , Si(CH₃)₂(OCH₃)
Si(CH₃)₂(CₙH₂ₙ₊₁) n=1-20
R=alkyl, aryl, (CH₂)ₙ-NH₂, H
R'=alkyl, aryl, (CH₂)ₙ-NH₂, H
R"=alkyl, aryl, (CH₂)ₙ-NH₂, H
R'"=alkyl , aryl, (CH₂)ₙ-NH₂, H

2. Surface-modified, pyrogenically produced aeresol-doped oxides according to Claim 1, **characterized in that** the oxides are oxides form the group SiO₂, Al₂O₃, TiO₂, BeO₃, ZrO₂, In₂O₃, ZnO, Fe₂O₃, Nb₂O₅ , V₂O₅, WO₃, SnO₂, GeO₂.

3. A method of producing the surface-modified oxides according to Claim 1 or 2, **characterized in that** pyrogenically produced oxides doped by aerosol are placed in a suitable mixing container, the oxides are sprayed under intensive mixing, optionally with water and/or acid at first and subsequently with a surface-modification reagent or a mixture of several surface-modification reagents, optionally re-mixed for 15 to 30 minutes and tempered at a temperature of 100 to 400°C for a period of 1 to 6 hours.

4. The use of the surface-modified oxides according to Claims 1 or 2 as reinforcing filler.

## Revendications

1. Oxydes modifiés en surface, dopés par aérosol et préparés par voie pyrogénique, **caractérisés en ce qu'**ils sont modifiés en surface par un ou plusieurs composés des groupes suivantes :
a) des organosilanes du type (RO)₃Si(CₙH₂ₙ₊₁) et
(RO)₃Si(CₙH₂ₙ₋₁)
R = alkyle
n = 1 à 20
b) des organosilanes du type R'ₓ(RO)_{y}Si(CₙH₂ₙ₊₁) et
(RO)₃Si(CₙH₂ₙ₊₁)
R = alkyle
R'= alkyle
R'= cycloalkyle
n = 1 à 20
x+y = 3
x = 1, 2
y = 1, 2
c) des halogénoorganosilanes du type X₃Si(C₂H₂ₙ₊₁) et X₃Si(CₙH₂ₙ₋₁)
X = Cl, Br
n = 1 à 20
d) des halogénoorganosilanes du type X₂(R')Si(CₙH₂ₙ₊₁) et X₂(R')Si(CₙH₂ₙ₋₁)
X = Cl, Br
R'= alkyle
R'= cycloalkyle
n = 1 à 20
e) des halogénoorganosilanes du type X(R')₂Si (CₙH₂ₙ₊₁) et X (R')₂Si(CₙH₂ₙ₋₁)
X = Cl, Br
R'= alkyle
R'= cycloalkyle
n = 1 à 20
f) des organosilanes du type (RO)₃Si(CH₂)ₘ-R'
R = alkyle
m = 0, 1 à 20
R'= méthyle, aryle, (par exemple -C₆H₅, restes phényle substitués)
-C₄F₉, -OCF₂-CHF-CF₃, -C₆F₁₃, -O-CF₂-CHF₂
-NH₂, -N₃, -SCN, -CH=CH₂, -NH-CH₂-CH₂-NH₂
-N-(CH₂-CH₂-NH₂)₂
-OOC(CH₃)C = CH₂
-OCH₂-CH (O)CH₂
-NH-CO-N-CO-(CH₂)₅
-NH-COO-CH₃, -NH-COO-CH₂-CH₃, -NH- (CH₂)₃Si(OR)₃
-Sₓ-(CH₂)₃Si (OR)₃
-SH
-NR'R''R''' (R' = alkyle, aryle; R'' = H, alkyle, aryle; R''' = H, alkyle, aryle, benzyle, C₂H₄NR'''' R''''' avec R'''' = A, alkyle et R''''' = H, alkyle)
g) des organosilanes du type (R")ₓ(RO)_{y}Si(CH₂)ₘ-R'
R"= alkyle x + y = 2
= cycloalkyle x = 1, 2
y = 1, 2
m = 0, 1 à 20
R'= méthyle, aryle (par exemple -C₆H₅, restes phényle substitués)
-C₄F₉, -OCF₂-CHF-CF₃, -C₆F₁₃, -O-CF₂-CHF₂
-NH₂, -N₃, -SCN, -CH=CH₂, -NH-CH₂-CH₂-NH₂
-N-(CH₂-CH₂-NH₂)₂
-OOC(CH₃)C = CH₂
-OCH₂-CH(O)CH₂
-NH-CO-N-CO-(CH₂)₅
-NH-COO-CH₃, -NH-COO-CH₂-CH₃, -NH-(CH₂)₃Si(OR)₃
-Sₓ-(CH₂)₃Si (OR)₃
-SH
-NR'RL''R''' (R' = alkyle, aryle; R'' = H, alkyle, aryle; R''' = H, alkyle, aryle, benzyle, C₂H₄NR'''' R''''' avec R'''' = A, alkyle et R'''' = H, alkyle)
h) des halogénoorganosilanes du type X₃Si(CH₂)ₘ-R'
X = Cl, Br
m = 0, 1 - 20
R'= méthyle, aryle (par exemple -C₆H₅, restes phényle substitués)
-C₄F₉, -OCF₂-CHF-CF₃, -C₆F₁₃, -O-CF₂-CHF₂
-NH₂, -N₃, -SCN, -CH=CH₂,
-NH-CH₂-CH₂-NH₂ ,
-N-(CH₂-CH₂-NH₂)₂
-OOC(CH₃)C = CH₂
-OCH₂-CH(O)CH₂
-NH-CO-N-CO-(CH₂)₅
-NH-COO-CH₃, -NH-COO-CH₂-CH₃, -NH-(CH₂)₃Si (OR)₃
-Sₓ-(CH₂)₃Si (OR)₃
-SH
i) des halogénoorganosilanes du type (R)X₂Si(CH₂)ₘ-R'
X = Cl, Br
R = alkyle, comme méthyle, éthyle, propyle
m = 0, 1 à 20
R'= méthyle, aryle (par exemple -C₆H₅, restes phényle substitués)
-C₄F₉, -OCF₂-CHF-CF₃, -C₆F₁₃ , -O-CF₂-CHF₂
-NH₂, -N₃, -SCN, -CH=CH₂, -NH-CH₂-CH₂-NH₂,
-N-(CH₂-CH₂-NH₂)
-OOC(CH₃)C = CH₂
-OCH₂-CH(O)CH₂
-NH-CO-N-CO-(CH₂)₅
-NH-COO-CH₃, -NH-COO-CH₂-CH₃, -NH-(CH₂)₃Si(OR)₃
-Sₓ-(CH₂)₃Si(OR)₃
-SH
j) des halogénoorganosilanes du type (R)₂XSi(CH₂)ₘ-R'
X = Cl, Br
R = alkyle
m = 0, 1 à 20
R'= méthyle, aryle, (par exemple -C₆H₅, restes phényle substitués)
-C₄F₉, -OCF₂-CHF-CF₃, -C₆F₁₃, -O-CF₂-CHF₂
-NH₂, -N₃, -SCN, -CH=CH₂, -NH-CH₂-CH₂-NH₂,
-N- (CH₂-CH₂-NH₂)₂ -OOC(CH₃)C = CH₂
-OCH₂-CH(O)CH₂
-NH-CO-N-CO-(CH₂)₅
-NH-COO-CH₃, -NH-COO-CH₂-CH₃, -NH- (CH₂)₃Si(OR)₃
-Sₓ-(CH₂)₃Si (OR)₃
-SH
k) des silazanes du type 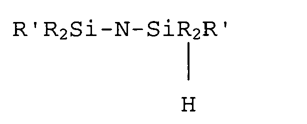 R = alkyle
R'= alkyle, vinyle
l) des polysiloxanes cycliques du type D 3, D 4, D 5, par exemple l'octaméthylcyclotétrasiloxane = D 4 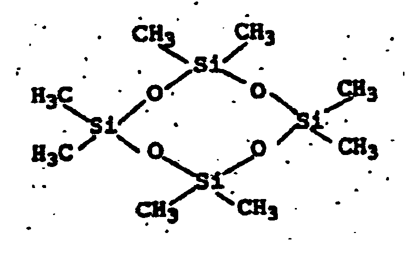
m) des polysiloxanes ou des huiles siliconées du type 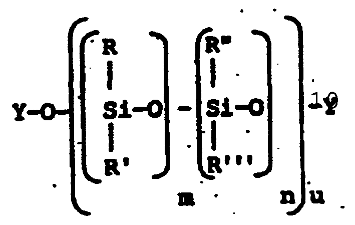 m = 0, 1, 2, 3, ... ∞
n = 0, 1, 2, 3, ... ∞
u = 0, 1, 2, 3, ... ∞
Y = CH₃ , H, CₙH₂ₙ₊₁, n = 1 à 20
Y = Si (CH₃) ₃, Si (CH₃)₂H,
Si(CH₃)₂OH, Si(CH₃)₂(OCH₃),
Si(CH₃)₂(CₙH2ₙ₊₁₎ n = 1 à 20
R = alkyle, aryle, (CH₂)ₙ-NH₂, H
R' = alkyle, aryle, (CH₂)ₙ-NH₂, H
R'' = alkyle, aryle, (CH₂)ₙ-NH₂, H
R''' = alkyle, aryle, (CH₂)ₙ-NH₂, H.

2. Oxydes modifiés en surface, dopés par aérosol et préparés par voie pyrogénique suivant la revendication 1, **caractérisés en ce que** les oxydes sont des oxydes du groupe formé par SiO₂, Al₂O₃, TiO₂, BeO₃, ZrO₂, In₂O₃, ZnO, Fe₂O₃ , Nb₂O₅, V₂O₅, WO₃, SnO₂, GeO₂.

3. Procédé de préparation des oxydes modifiés en surface suivant la revendication 1 ou 2, **caractérisé en ce que** l'on charge des oxydes dopés par aérosol et préparés par voie pyrogénique dans une cuve de mélange appropriée en mélangeant intensivement les oxydes, le cas échéant on les pulvérise d'abord avec de l'eau et / ou de l'acide et ensuite avec un réactif de modification de surface ou un mélange de plusieurs réactifs de modification de surface, le cas échéant on mélange encore pendant 15 à 30 minutes et on étuve à une température de 100 à 400°C sur un laps de temps de 1 à 6 h.

4. Utilisation des oxydes modifiés en surface suivant les revendications 1 ou 2 en tant que charge de renforcement.
